# EUROPÄISCHE PATENTSCHRIFT

(11) **EP 0 421 108 B1**
(45) Veröffentlichungstag und Bekanntmachung des Hinweises auf die Patenterteilung: **05.10.1994**
(21) Anmeldenummer: 90116145.5
(22) Anmeldetag: 23.08.1990
(51) Int. Cl.: A01G 3/03

(54) **Hand-Schere, insbesondere Ast-,Hecken- und/oder Gartenschere**
Hand shears, especially pruning, hedge and/or garden shears
Cisailles à main, en particulier sécateur, cisailles à haies et/ou de jardinage

(30) Priorität: 08.09.1989 DE 3929891; 10.05.1990 DE 4015021
(43) Veröffentlichungstag der Anmeldung: 10.04.1991
(73) Patentinhaber: WOLF-Geräte GmbH Vertriebsgesellschaft KG, D-57518 Betzdorf (DE)
(72) Erfinder: Weid, Helmut, D-5241 Niederdreisbach (DE); Held, Peter, D-5241 Scheuerfeld (DE)
(74) Vertreter: Müller, Gerd, Dipl.-Ing.

(56) Entgegenhaltungen:
- DE-A- 1 553 692
- FR-A- 2 348 022
- US-A- 1 607 470

## Beschreibung

Gegenstand der Erfindung ist eine Hand-Schere, und zwar insbesondere eine Ast-, Hecken- und/oder Gartenschere, mit zwei durch zwei Handhebel um ein gemeinsames Gelenk aufeinanderzu und voneinanderweg verschenkbaren Schneidelementen, bei welcher die Handhebel durch ein zweites, zum Schneidelementen-Gelenk parallel versetzes Gelenk unabhängig von den Schneidelementen miteinander in unmittelbarer Verbindung stehen und bei welcher eines der Schneidelemente starr mit dem einen der beiden Handhebel in Verbindung steht, während das andere Schneidelement einen über das Schneidelementen-Gelenk auskragenden Antriebsarm aufweist, an dem eine Koppel mit einem Ende angelenkt ist, die wiederum über ihr anderes Ende ebenfalls gelenkig am zweiten Handhebel befestigt ist, wobei die beiden Handhebel und die beiden Schneidelemente miteinander ein Viergelenk-System bilden, bei dem zumindest die Anlenkachse der Koppel am zweiten Handhebel relativ zu dem beide Handhebel unmittelbar verbindenden Gelenk in ihrem Abstand veränderbar ist, bei dem die Anlenkachse der Koppel am zweiten Handhebel quer zu ihrer Achsrichtung verschiebbar und feststellbar geführt ist und bei dem Anlenkachse der Koppel in eine Schlitzführung am zweiten Handhebel eingreift sowie längs dieser mittels eines Schiebers verstellbar abgestützt ist.

Durch die DE-A-15 53 692 ist bereits eine Hand-Schere bekannt, die mit der Hand-Schere der vorgenannten Gattung weitgehend übereinstimmt. Unterschiedlich bei der Hand-Schere nach DE-A-15 53 692 ist lediglich, daß die quer zu ihrer Achsrichtung verschiebbar und feststellbar geführte Anlenkachse der Koppel nicht dem zweiten Handhebel zugeordnet ist, sondern dem über das Schneidelementen-Gelenk auskragenden Antriebsarm des vom zweiten Handhebel über die Koppel betätigbaren Schneidelement. Die Abstandsveränderung der verschiebbaren und feststellbar geführten Anlenkachse der Koppel findet in diesem Falle relativ zu dem Schneidelementen-Gelenk statt.

Trotz der bestehenden baulichen Unterschiede haben jedoch die gattungsgemäße Hand-Schere und die Hand-Schere nach DE-A-15 53 692 praktisch eine übereinstimmende Wirkungsweise. Ihr Vorteil gegenüber den nach den Eingelenk-System arbeitenden Scheren-Bauarten liegt nämlich darin, daß sie eine Kraftübersetzung ermöglichen, die nicht in alleiniger Abhängigkeit von den Armlängenverhältnissen der Schneidelemente einerseits und der diese tragenden Handhebel andererseits steht, sondern wesentlich durch die Längenverhältnisse zwischen den einzelnen Gliedern ihres Viergelenk-Systems mitbestimmt wird. Schon durch Aufbringung relativ geringer Handkräfte an den Bedienungshandgriffen der beiden Handhebel lassen sich daher mit den Schneidelementen über das Viergelenk-System schon beträchtliche Schnittkräfte erzielen.

Vorteilhaft ist dabei im einen wie im anderen Falle, daß eine Hand-Schere zur Verfügung steht, die einfach und dauerhaft funktionssicher auf unterschiedliche Kraftübersetzungen eingestellt werden kann.

Eine Unzulänglichkeit liegt bei der Hand-Schere nach DE-A-15 53 692 jedoch noch darin, daß zur Veränderung der Kraftübersetzung Manipulationen unmittelbar im Bereich der verschiebbar und feststellbar ausgelegten Gelenkstelle zwischen der Koppel und dem auskragenden Antriebsarm des einen Schneidelementes vorgenommen werden müssen. Es besteht daher die Notwendigkeit, für jede vorzunehmende Änderung der Kraftübersetzung in normale bzw. übliche Bedienungs-Halterung der Hand-Schere an den Bedienungshandgriffen zeitweilig aufzugeben, um die Verstellmanipulationen durchzuführen.

Die Erfindung zielt daher auf die Schaffung einer einfach und dauerhaft funktionssicher auf unterschiedliche Kraftübersetzungen einstellbare Hand-Schere der eingangs angegebenen Gattung zu schaffen, die auch eine bedienungsgünstige Auslegung hat.

Die Lösung dieser Aufgabe wird erfindungsgemäß in Anspruch 1 grundsätzlich dadurch erreicht, daß der Schieber zu dem einen Bedienungshandgriff aufweisenden oder bildenden Ende des zweiten Handhebels hin geführt und dort mit einer Ein- und Feststellvorrichtung in Kupplungsverbindung steht, die am Handhebel ihr Widerlager hat.

Die Verstellung kann in diesem Falle leicht vom Handgriff aus erfolgen, ohne daß hierzu die Bedienungshand ihre normale Position verlassen muß.

Anspruch 2 sieht erfindungsgemäß vor, daß der zweite Handhebel wenigstens auf einem Teil seiner Länge aus einem Rohr oder Hohlprofil besteht, in dem der Schieber auf dem größten Teil seiner Länge - verdeckt- aufgenommen werden kann.

Eine stufenlose Verstellung der Kraftübersetzung läßt sich erfindungsgemäß - nach Anspruch 3 - erreichen, wenn die Ein- und Feststellvorrichtung aus zwei ineinandergreifenden Gewindestücken besteht, von denen eines am Schieber angreift, während das andere sein Widerlager am zweiten Handhebel hat. Dabei erweist es sich gemäß Anspruch 4 als vorteilhaft, wenn das eine Gewindestück am Schieber drehfest angreift, während das andere Gewindestück am Handhebel drehbeweglich, aber axial unverschiebbar gehalten ist. Das drehbewegliche Gewindeglied kann dabei - gemäß Anspruch 5 - entweder am freien Ende des Handhebels oder aber in mit Abstand von diesem angeordneten Ausschnitten des Handhebels drehbar aber verschiebefest abgestützt werden.

Wenn eine stufenweise Veränderung der Kraftübersetzung innerhalb vorgegebener Grenzen ausreichend ist, kann - entsprechend der Lehre des Anspruchs 6 - die Ein- und Feststellvorrichtung von einem am Schieber angreifenden Rastglied gebildet werden, das mit einer sich in Längsrichtung des Handhebels erstreckenden Rastkulisse zusammenwirkt, die eine Mehrzahl von im Abstand hintereinanderliegenden Rasteingriffen für das Rastglied enthält.

Das Rastglied kann in diesem Falle - nach dem Vorschlag des Anspruchs 7 - als durch Federkraft in Einrückstellung beaufschlagter Taster ausgelegt werden, der sich bspw. allein mit dem Daumen der den Bedienungshandgriff erfassenden Bedienungshand betätigen läßt, wobei er jeweils selbsttätig in den ihm nächstgelegenen Rasteingriff einrückt.

Dadurch, daß nach Anspruch 8 erfindungsgemäß die Schlitzführung mit Aufnahme- bzw. Rastmulden für die Anlenkachse der Koppel versehen ist, welche sich mindestens in der der Außenseite des Handhebels benachbarten Schlitzkante befinden, kann auf einfache Weise erreicht werden, daß die Koppelkraft unmittelbar in dem Längenabschnitt des zweiten Handhebels abgefangen wird, in welchem sich die Schlitzführung befindet. Die Folge davon ist dann, daß der an der verschiebbaren Anlenkachse der Koppel angreifende Schieber und die diesem zugeordneten Elemente der Ein- und Feststellvorrichtung kräftefrei bleiben.

Erfindungsgemäß ist nach Anspruch 9 des weiteren vorgesehen, daß die Rastmulden sich in zueinander etwa äquidistanter Anordnung in beiden Schlitzkanten befinden, so daß praktisch an allen Stellen der Schlitzführung die mit dieser zusammenwirkenden Anlenkachse der Koppel ein gleichbleibendes Führungsspiel hat.

Bevorzugt wird eine Bauart für die Hand-Schere, bei welcher gemäß Anspruch 10 je eine Rastmulde an beiden Schlitzenden und eine weitere Rastmulde etwa auf halber Schlitzlänge angeordnet ist. Es sind auf diese Art und Weise also drei verschiedene Übersetzungsverhältnisse für die Handschere fixierbar ist. Bei Bedarf können aber auch andere Zwischenstellungen mit Hilfe der Ein- und Feststellvorrichtung justiert werden.

Wenn es für den praktischen Gebrauch einer erfindungsgemäßen Hand-Schere ausreichend ist, mit den durch die Aufnahme- bzw. Rastmulden fixierbaren Übersetzungsverhältnissen zu arbeiten, dann kann gegebenenfalls auch auf die manuell betätigte Ein- und Feststellvorrichtung verzichtet und dann eine selbsttätige Verstellung für das Übersetzungsverhältnis vorgesehen werden. Erreichbar ist das erfindungsgemäß nach Anspruch 11, also dadurch, daß an der mit ihrer Anlenkachse in die Schlitzführung am zweiten Handhebel angreifenden Koppel im Abstandsbereich zwischen den beiden Anlenkachsen ein Federelement mit einer Wirkrichtung angreift, die von dem die beiden Handhebel unmittelbar verbindenden Gelenk weg gerichtet ist, und daß der Öffnungs-Schwenkwinkel zwischen beiden Schermessern durch einen ortsfesten Anschlag am Handhebel begrenzt ist.

Wenn dabei das Federelement gemäß Anspruch 12 aus einer Zugfeder besteht, die mit ihrem einen Ende an der Koppel angreift, während ihr anderes Ende am zweiten Handhebel verankert ist, kann durch unterschiedliches weites Auseinanderschwenken der Handhebel die Einstellung unterschiedlicher Übersetzungsverhältnisse selbsttätig bewirkt werden.

Diese Vorgehensweise läßt sich dabei noch begünstigen, wenn gemäß Anspruch 13 der Angriffspunkt der Feder, insbesondere Zugfeder, an der Koppel von deren in die Schlitzführung eingreifender Anlenkachse einen größeren Abstand hat, als von der anderen Anlenkachse.

Der Gegenstand der Erfindung ist in der Zeichnung anhand von Ausführungsbeispielen dargestellt. Es zeigen
- Figur 1: in Seitenansicht eine Hand-Schere mit zwei Schermessern in der gegeneinander verschwenkten Schließstellung der beiden Schermesser bei kleinstmöglicher Einstellung der Kraftübersetzung,
- Figur 2: die Hand-Schere nach Fig. 1 bei in Öffnungsstellung auseinandergefahrenen Schermessern, Figur 3 einen Schnitt entlang der Linie III-III in Fig. 1,
- Figur 4: in einer der Fig. 1 entsprechenden Darstellung die Hand-Schere mit in Schließlage gegeneinander verschwenkten Schermessern bei größtmöglicher Einstellung der Kraftübersetzung,
- Figur 5: die Hand-Schere nach Fig. 4 bei in Öffnungsstellung auseinandergeschwenkten Schermessern,
- Figur 6: in größerem Maßstab den erfindungswesentlichen Teilbereich einer Handschere,
- Figur 7: eine wesentliche Einzelheit der Hand-Schere nach Fig. 6, während die
- Figuren 8: bis 13 in einer der Fig. 6 ähnlichen Darstellung eine weitere Ausführungsform einer Hand-Schere in sechs verschiedenen Funktionsstellungen wiedergeben.

Die in der Zeichnung dargestellte Hand-Schere 1 läßt sich in besonders vorteilhafter Weise als Ast-, Hecken- und/oder Gartenschere benutzen. Als Haupt-Funktionsteile weist dabei die Hand-Schere 1 die beiden Schermesser 2 und 3 sowie die beiden Handhebel 4 und 5 auf.

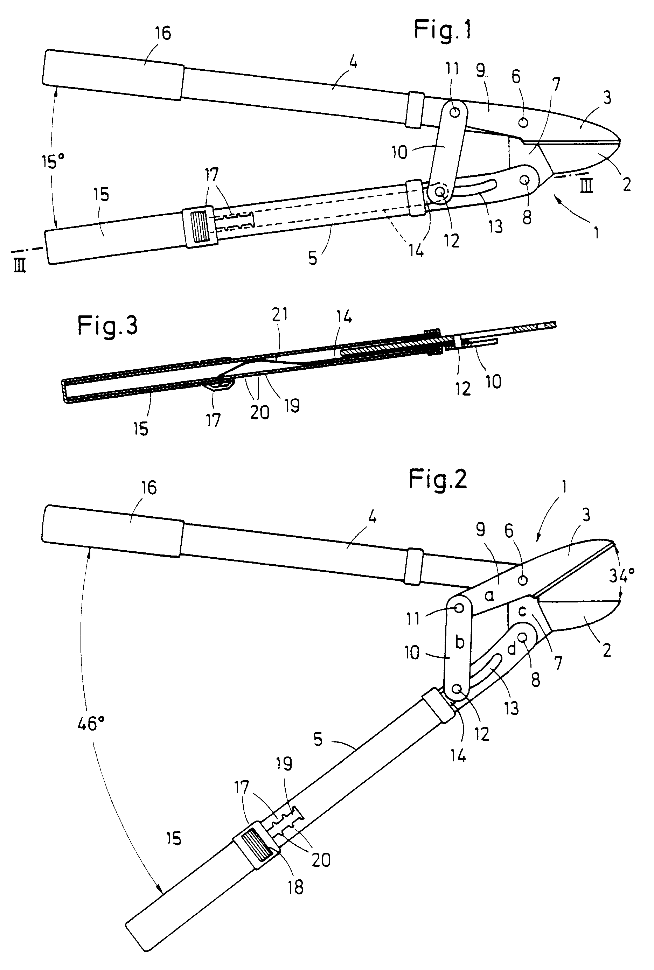

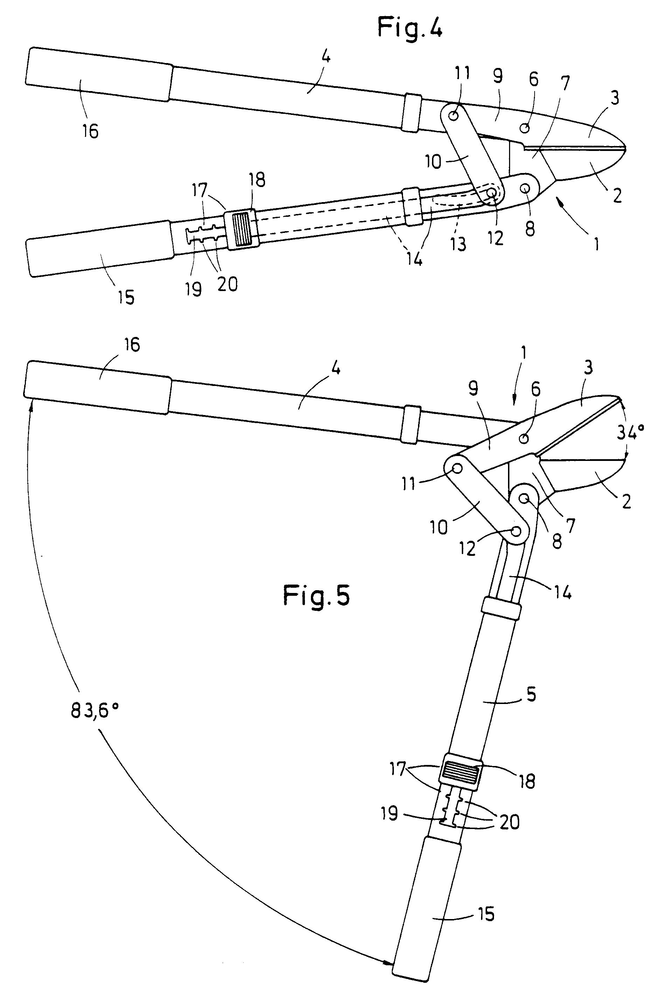

Ein wichtiges Ausgestaltungsmerkmal der Hand-Schere 1 besteht dabei darin, daß die beiden Schermesser 2 und 3 zwischen ihrer jeweils den Figuren 1 und 4 entnehmbaren Schließlage und ihrer jeweils wiederum aus den Figuren 2 und 5 ersichtlichen Öffnungslage über einen konstanten Öffnungswinkel, bspw. von 34ₒ, verstellbar sind, und zwar unabhängig davon, ob die zu ihrer Betätigung dienenden beiden Handhebel 4 und 5 relativ zueinander über einen verhältnismäßig kleinen Winkelbereich - siehe Fig. 1 und 2 -oder aber über einen relativ großen Winkelbereich - siehe Fig. 4 und 5 - verstellt werden können.

Mit anderen Worten: Bei relativ kleiner Kraftübersetzung der Hand-Schere 1 durchlaufen die verschwenkbaren Schermesser 2 und 3 den gleichen Verstellwinkel - siehe Fig. 1 und 2 - wie bei einer Betätigung mit relativ großer Kraftübersetzung-vgl. Fig. 4 und 5.

Aus der Zeichnung geht hervor, daß die beiden Schermesser 2 und 3 durch ein gemeinsames Gelenk miteinander in verschwenkbarer Verbindung stehen. Dabei ist das Schermesser 2 starr mit dem Handhebel 4 verbunden, und zwar über einen seitwärts gerichteten Ausleger 7, welcher in den Fig. 1 und 2 sowie 4 und 5 deutlich zu sehen ist und der selbst als unteres Schermesser 2 ausgebildet sein kann. Dabei trägt dieser Ausleger 7 ein zum Schermesser-Gelenk 6 parallel versetztes, weiteres Gelenk 8, über welches die beiden Handhebel 4 und 5 unabhängig von den Schermessern 2 und 3 miteinander in unmittelbarer Verbindung stehen.

Statt der beiden Schermesser 2 und 3 kann die Schere auch zwei andere Schneidelemente aufweisen, z.B. einen Amboß und eine gegen diesen arbeitende Schneide. Dabei kann der das untere Schneidelement bildende Amboß seitlich am Ausleger 7 angeschraubt sein.

Die Wirkverbindung des Schermessers 3 mit dem zweiten Handhebel 5 wird dadurch hergestellt, daß das Schermesser 3 einen über das Schermessergelenk 6 auskragenden Antriebsarm 9 aufweist, an dem eine Koppel 10 über eine Anlenkachse 11 mit ihrem einen Ende gelenkig angreift. Andererseits ist diese Koppel über eine weitere Anlenkachse 12 ebenfalls gelenkig an den zweiten Handhebel 5 angeschlossen. Sämtliche Gelenke 6 und 8 sowie Anlenkachsen 11 und 12 erstrecken sich in gleicher Richtung, also parallel zueinander und normal zur Schwenkebene der Schermesser 2 und 3 sowie der Handhebel 4 und 5. Die über die Gelenke 6 und 8 sowie Anlenkachsen 11 und 12 in Verbindung stehenden Getriebeglieder bilden miteinander ein Viergelenk-System mit den Getriebegliedern a, b, c und d. Das Getriebeglied a ist dabei der Antriebsarm 9 für das Schermesser 3, das Getriebegelied b wird von der Koppel 10 gebildet, während das Getriebeglied c der Ausleger 7 des Handhebels 4 ist. Als Getriebeglied d fungiert schließlich jeweils der zwischen dem Gelenk 8 und der Anlenkachse 12 gelegene Längenabschnitt des Handhebels 5.

Aus den Fig. 1 und 2 sowie 4 und 5 ist ersichtlich, daß bei dem in der Zeichnung dargestellten Ausführungsbeispiel der Hand-Schere 1 die Getriebeglieder a, b und c des Viergelenk-Systems eine gleichbleibende, also unveränderliche Wirklänge aufweisen. Hingegen kann diesen Zeichnungsfiguren entnommen werden, daß sich die Wirklänge des Getriebegliedes d im Viergelenk-System innerhalb vorgegebener Grenzen variieren läßt. Die größte Wirklänge hat dabei das Getriebeglied d, bei der aus den Fig. 1 und 2 ersichtlichen Einstellung. Hingegen ist aus den Fig. 4 und 5 der Zeichnung die Einstellung zu sehen, bei der das Getriebeglied d seine kleinste Wirklänge aufweist.

Durch die Wirklängen-Änderung des Getriebegliedes d läßt sich mit Hilfe des Viergelenk-Systems das Kraftübersetzungsverhältnis der Handhebel 4 und 5 auf die Schermesser 2 und 3 variieren. Bei der Einstellung nach den Fig. 1 und 2, also bei großer Wirklänge des Getriebegliedes d, ist dabei die Hand-Schere 1 für ihr kleinstmögliches Kraftübersetzungsverhältnis eingestellt. Hingegen hat die Hand-Schere bei der kleinstmöglichen Einstellung des Getriebegliedes d nach den Fig. 4 und 5 ihr größtmögliches Kraftübersetzungsverhältnis. Die unterschiedlichen Kraftübersetzungsverhältnisse sind dabei dadurch gekennzeichnet, daß die Handhebel 4 und 5 bei kleinem Kraftübersetzungsverhältnis auch nur über einen relativ geringen Schwenkwinkel zueinander beweglich sind -siehe Fig. 1 und 2. Hingegen lassen sich die beiden Handhebel 4 und 5 bei Einstellung des großen Kraftübersetzungsverhältnisses auch über einen großen Schwenkwinkel relativ zueinander verlagern - siehe Fig. 4 und 5.

Es sei hier noch erwähnt, daß bei der Einstellung der Hand-Schere 1, wie sie in den Fig. 1 und 2 gezeigt wird, im Viergelenk-System das Getriebeglied c die kleinste Wirklänge aufweist, während zugleich das Getriebeglied d die größte Wirklänge hat.

Im Gegensatz hierzu ergibt sich bei der Einstellung der Hand-Schere 2 nach den Fig. 4 und 5, daß das Getriebeglied b die größte Wirklänge im Viergelenk-System hat, während das Getriebeglied d dort mit der kleinsten Wirklänge im Viergelenk-System arbeitet.

Es sei an dieser Stelle erwähnt, daß ohne weiteres die Möglichkeit besteht, bei der Hand-Schere 1 gegebenenfalls auch die Länge des Getriebegliedes a und/oder des Getriebegliedes b variierbar zu gestalten, um hierdurch eine weitere Variation der Kraftübersetzung zu ermöglichen und/oder den Schwenkwinkelbereich zwischen den beiden Schermessern 2 und 3 zu beeinflussen. Denkbar wäre es zu diesem Zweck bspw., den Antriebsarm 9 und/oder die Koppel 10 jeweils in Längsrichtung mit einer Lochreihe auszustatten und dabei die Anlenkachse 11 so zu gestalten, daß sie sich mit einfachen Handgriffen in den Löchern dieser Lochreihen bedarfsweise umstecken läßt.

Die Anlenkachse 12 für die Koppel 10 am Handhebel 5 greift am letzteren in eine Schlitzführung 13 ein. Diese verläuft auf einem Kreisbogen um die Anlenkachse 11 mit einem Radius von der Länge des Getriebegliedes b (Koppel 10). Dadurch ist es möglich, die Übersetzung bei geschlossener Schere zu ändern, ohne daß die Position der Handhebel 4, 5 geändert wird. Mit der Anlenkachse 12 steht ein Schieber 14 in ständiger Verbindung, der über den größten Teil seiner Länge in den zumindest teilweise als Rohr oder Hohlprofil ausgestalteten Handhebel 5 hineinragt, wie das in Fig. 3 der Zeichnung deutlich zu sehen ist.

Dabei ist der Schieber 14 bis in den Bereich eines Bedienungshandgriffes 15 geführt, welcher vom hinteren Ende des Handhebels 5 gebildet oder aber an diesem angebracht ist. Ein entsprechender Bedienungshandgriff 16 befindet sich natürlich auch am freien Ende des Handhebels 4 der Hand-Schere 1.

Mit dem Schieber 14 ist eine Ein- und Feststellvorrichtung 17 gekuppelt, die wiederum mit dem Handhebel 5 zusammenwirkt.

Wenn es darauf ankommt, eine möglichst feinstufige bzw. stufenlose Längenänderung des Getriebegliedes d im Viergelenk-System zu bewirken, dann empfiehlt es sich, als Ein-und Feststellvorrichtung 17 zwei ineinandergreifende Gewindestücke zu benutzen, von denen dann eines am Schieber 14 angreift, während das andere sein Widerlager am Handhebel 5 hat. Dabei ist es bspw. möglich, das am Schieber 14 befindliche Gewindestück drehfest vorzusehen, während das dem Handhebel 5 zugeordnete Gewindestück drehbeweglich, aber axial unverschiebbar gehalten wird. Im einfachsten Falle läßt sich dann das drehbewegliche Gewindeglied am freien Ende des Handhebels 5, also hinter dem Bedienungshandgriff 15 anordnen. Selbstverständlich ist es auch möglich, den Handgriff selbst drehbar auszubilden, der dann nach der Verstellung arretierbar ist.

Wenn der von einem Rohr oder einem Hohlprofil gebildete Handhebel 5 jedoch eine Querschnittsform hat, die breiter als hoch, z.B. langrund oder rechteckig, gestaltet ist, dann kann das drehbewegliche Gewindeglied auch mit Abstand vor dem Bedienungshandgriff 15 liegen und in Ausschnitten des Handhebels 5 so aufgenommen werden, daß es zur Betätigung jeweils segmentartig aus den Breitseiten des Handhebelprofils vorsteht.

Bei dem in der Zeichnung dargstellten Ausführungsbeispiel einer Hand-Schere 1 wird jedoch die Ein- und Feststellvorrichtung von einem am Schieber 14 angreifenden Rastglied 18 gebildet, das mit einer sich in Längsrichtung des Handhebels 5 erstreckenden Rastkulisse 19 zusammenwirkt. Dabei ist diese Rastkulisse 19 mit einer Mehrzahl von im Abstand hintereinanderliegenden Rasteingriffen 20 ausgestattet, in die das Rastglied 18 jeweils kraft- und formschlüssig zum Eingriff gelangen kann.

Das Rastglied 18 befindet sich vorzugsweise an einem Drucktaster, der auf einem vom Schieber 14 getragenen Federelement 21 montiert ist. Das Federelement 21 ist dabei so gestaltet, daß es das Rastglied 18 mit den Rasteingriffen 20 der Rastkulisse 19 in Eingriff zu halten sucht. Durch Daumendruck auf den Taster läßt sich das Rastglied 18 entgegen der Rückstellkraft des Federelementes 21 mit den Rasteingriffen 20 der Rastkulisse 19 außer Eingriff stellen und zugleich der Schieber zwecks Längenänderung des Gliedes d in der einen oder anderen Richtung verschieben. Nach Loslassen des Tasters rückt dann das Rastglied 18 unter der Rückstellkraft des Federelementes 21 wieder in den ihm nächstliegenden Rasteingriff 20 der Rastkulisse 19 ein, so daß die entsprechende Einstellung des Viergelenk-Systems fixiert wird.

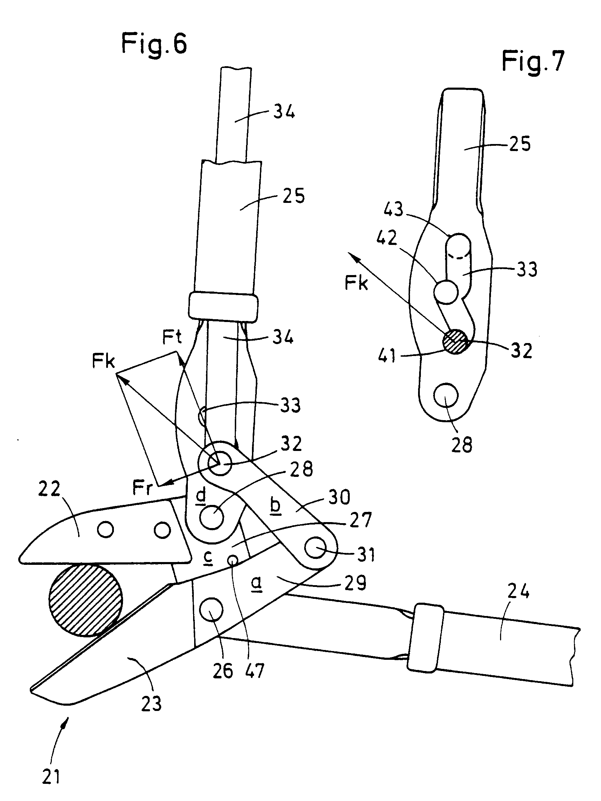

Grundsätzlich hat die in Fig. 6 der Zeichnung dargestellte Hand-Schere 21 die gleiche Auslegung wie die Hand-Schere 1 nach den Fig. 1 bis 5. Sie weist also die beiden Schermesser 22 und 23 sowie die beiden Handhebel 24 und 25 auf.

Auch hier haben die beiden Schermesser 22 und 23 ein gemeinsames Gelenk 26 und die beiden Handhebel 24 und 25 stehen miteinander durch ein weiteres Gelenk 28 in ständiger Verbindung. Das Schermesser 23 hat einen über das Gelenk 26 auskragenden Antriebsarm 29, mit dem eine Koppel 30 über eine Anlenkachse 31 in ständiger Verbindung steht, die andererseits eine Anlenkachse 32 hat, mit der sie in einer Schlitzführung 33 am Handhebel 25 geführt wird.

Das Schermesser 22 ist mit dem Handhebel 24 über einen seitwärts gerichteten Ausleger 27 starr verbunden, wobei der Ausleger 27 auch das Gelenk 28 für den Handhebel 25 trägt. Innerhalb der Schlitzführung 33 läßt sich die Anlenkachse 32 der Koppel 30 mit Hilfe eines Schiebers 34 innerhalb der durch die Länge der Schlitzführung 33 bestimmten Grenzen verlagern.

Die Besonderheit der in Fig. 6 dargestellten Hand-Schere 21 gegenüber der Hand-Schere 1 nach den Fig. 1 bis 5 liegt in einer Einzelheit, die deutlich der Fig. 7 der Zeichnung entnommen werden kann. Dort ist zu sehen, daß die Schlitzführung 33 mit mehreren Aufnahme- bzw. Rastmulden 41, 42, 43 für die Anlenkachse 32 der Koppel 30 versehen ist. Dabei ist es von Vorteil, wenn die Schlitzführung 33 mit ihren Rastmulden 41, 42 und 43 über ihre ganze Länge eine äquidistante Gestaltung hat, damit die Anlenkachse 32 an jeder Stelle innerhalb der Schlitzführung 33 mit gleichbleibendem Funktionsspiel gehalten und geführt werden kann.

Die beiden Rastmulden 41 und 43 sind dabei an den voneinander weg gerichteten Enden der Schlitzführung vorgesehen, während die dritte Rastmulde 42 sich etwa auf halber Länge der Schlitzführung 33 befindet. Beim Schneiden mit der Hand-Schere 21 erzeugt die das Getriebeglied b im Viergelenk-System a, b, c, d bildende Koppel 30 eine Koppelkraft Fk in Richtung ihrer Längsachse, wie aus dem in Fig. 6 angedeuteten Kräfteparallelogramm hervorgeht. Diese Koppelkraft Fk teilt sich in die Tangentialkomponente Ft und die Radialkomponente Fr auf. Die Tangentialkomponente Ft wirkt sich dabei als eine Druckkraft auf den Schieber 34 aus, welche normalerweise von der mit dem Schieber 34 zusammenwirkenden Ein-und Feststellvorrichtung (siehe Feststellvorrichtung 17 in den Fig. 1 bis 5) aufgenommen werden muß.

Gemäß Fig. 7 der Zeichnung sind nun aber die Aufnahme- bzw. Rastmulden 41, 42, 43 in der Schlitzführung 33 so vorgesehen, daß von ihnen die Koppelkraft Fk jeweils sicher aufgenommen wird, weil die Anlenkachse 32 der Koppel 30 hierin eine sichere Stützanlage erhält. Die Koppelkraft Fk wird damit voll im Getriebeglied d des Viergelenk-Systems aufgenommen, d.h. die Ein- und Feststellvorrichtung ist hiervon entlastet.

Zum Zwecke der Veränderung des Übersetzungsverhältnisses der Hand-Schere müssen lediglich die beiden Handhebel 24 und 25 so in Öffnungsrichtung bewegt werden, daß die Anlenkachse 32 aus der jeweiligen Aufnahme- bzw. Rastmulde 41, 42, 43 ausklinkt, damit sie dann über den Schieber 34 verlagert werden kann.

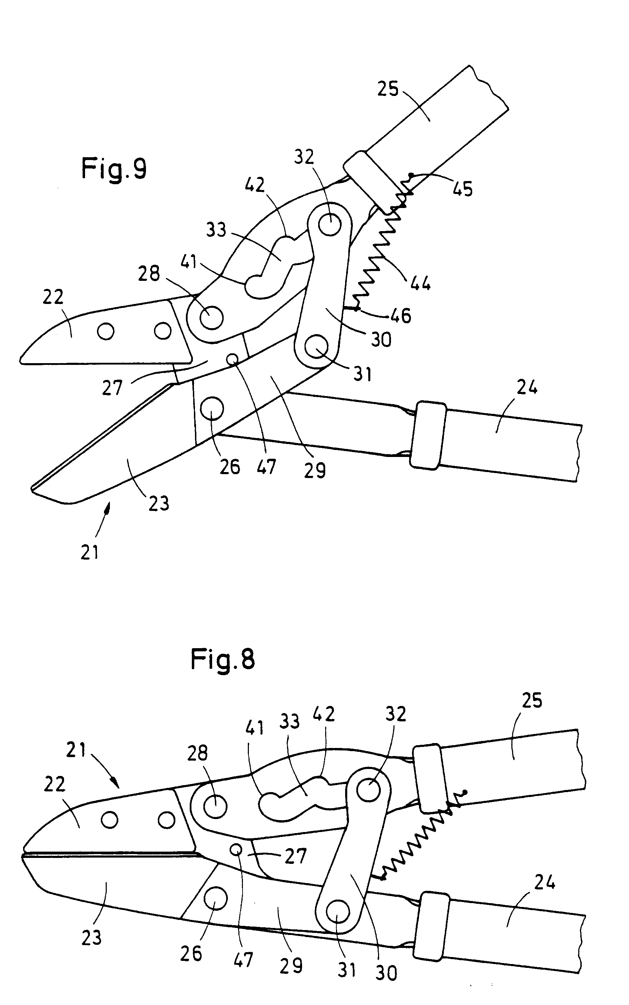

Die in den Fig. 8 bis 13 dargestellte Hand-Schere 21 hat grundsätzlich die gleiche Ausbildung wie die Hand-Schere 21 nach den Fig. 6 und 7. Unterschiedlich ist lediglich, daß dort der Schieber 34 sowie eine mit diesem zusammenwirkende Ein- und Feststellvorrichtung am Handhebel 25 nicht vorhanden ist.

Statt dessen ist zwischen der Koppel 30 und dem Handhebel 25 ein Federelement 44, und zwar insbesondere eine Zugfeder 44 eingebaut. Diese Zugfeder 44 wird einerseits bei 45 am Handhebel 25 verankert und greift bei 46 im Abstandsbereich zwischen den beiden Anlenkachsen 31 und 32 an der Koppel 30 an.

Der Angriffspunkt 46 der Zugfeder 44 an der Koppel 30 liegt dabei außerhalb einer geraden Verbindungslinie durch die beiden Anlenkachsen 31 und 32 und befindet sich darüber hinaus näher an der Anlenkachse 31 als an der Anlenkachse 32.

Des weiteren sitzt auf dem Ausleger 27 zwischen dem Schermesser 22 und dem Handhebel 24 ortsfest ein Anschlag 47, mit dem der Antriebsarm 29 des Schermessers 23 in Wirkverbindung treten kann, um den maximalen Öffnungswinkel zwischen den beiden Schermessern 22 und 23 zu begrenzen.

Die Hand-Schere 21 nach den Fig. 8 bis 13 bietet die Möglichkeit einer gewissermaßen selbsttätigen Verstellung des Übersetzungsverhältnisses zwischen den beiden Handhebeln 24 und 25 und den beiden Schermessern 22 und 23.

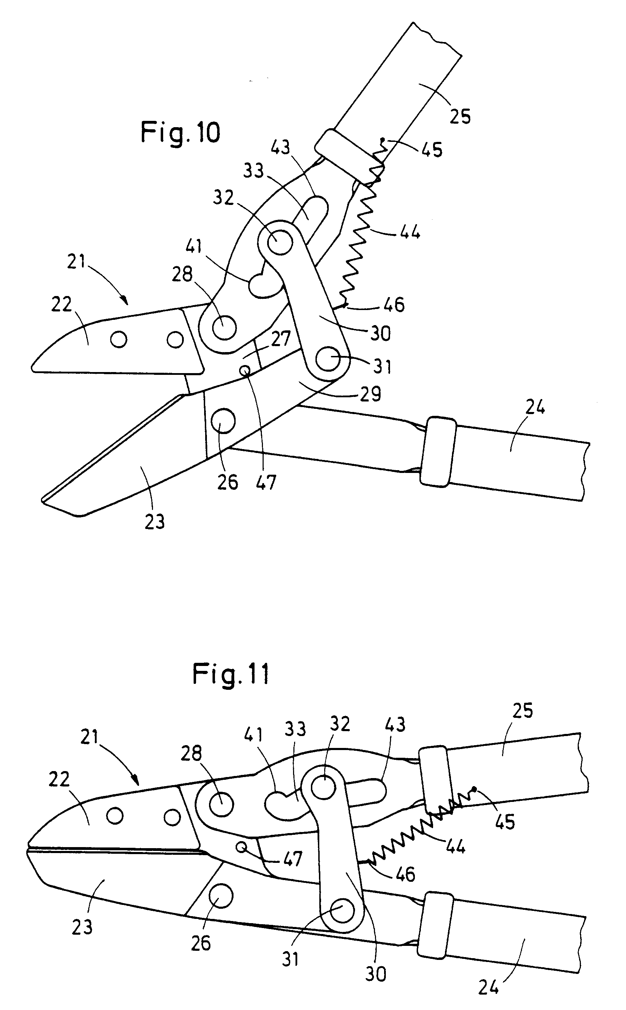

Geht man davon aus, daß die Hand-Schere 21 grundsätzlich für das kleinste Übersetzungsverhältnis eingestellt ist, dann befindet sich in dem aus Fig. 8 ersichtlichen, geschlossenen Zustand die Koppel 30 unter der Einwirkung der Zugfeder 44 in einer Stellung, bei der ihre Anlenkachse 32 in der Aufnahme- bzw. Rastmulde 43 liegt. Werden nun die Schermesser 22 und 23 relativ zueinander in die größtmögliche Öffnungsstellung gebracht, wie das die Fig. 9 zeigt, dann läuft der Antriebsarm 29 des Schermessers 23 gegen den Anschlag 47 an. Der Handhebel 25 kann jedoch über die Stellung nach Fig. 9 hinaus, bspw. bis in die Stellung nach Fig. 10 weiterbewegt werden. Daddurch klinkt dann die Anlenkachse 32 der Koppel 30 aus der Aufnahme- bzw. Rastmulde 43 aus und gleitet bis in den Bereich der Aufnahme- bzw. Rastmulde 42 der Schlitzführung 33, wie das die Fig. 10 und 11 erkennen lassen.

Wird nach der Durchführung eines Schnittes die Hand-Schere aus ihrer der Fig. 11 entsprechenden Schließstellung durch Auseinanderbewegen der beiden Handhebel 24 und 25 leicht geöffnet, dann rückt der Anlenkzapfen 32 der Koppel 30 aus der Aufnahme- bzw. Rastmulde 42 aus und springt unter der Einwirkung der Zugfeder 44 in die Aufnahme- bzw. Rastmulde 43 zurück, so daß sich wieder die Stellung nach Fig. 8 ergibt.

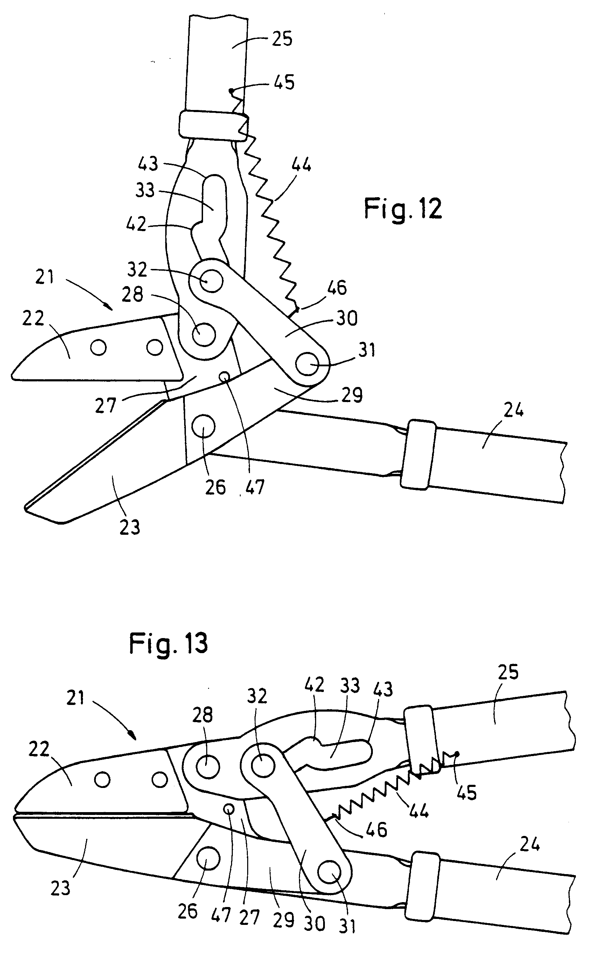

Zwecks Einstellung des größtmöglichen Übersetzungsverhältnisses für die Hand-Schere 21 müssen die beiden Handhebel 24 und 25 bis in die der Fig. 12 entsprechende Winkelstellung auseinander bewegt werden. Hierdurch fällt dann die Koppel 30 mit ihrer Anlenkachse 32 in die Aufnahme- bzw. Rastmulde 41 ein und wird in dieser trotz größtmöglicher Vorspannung der Zugfeder 44 selbsttätig fixiert. Dies ist darauf zurückzuführen, daß die Befestigungsstellen 45 und 46 der Zugfeder 44 mit der Anlenkachse 31 zwischen der Koppel 30 und dem Antriebsarm 29 des Schermessers 23 auf einer geraden Linie liegen.

Auch in der Stellung nach Fig. 10 findet die selbsttätige Verrastung der Anlenkachse 32 in der Aufnahme- bzw. Rastmulde 42 der Schlitzführung 33 statt. Es ist in Fig. 10 zu sehen, daß auch dort die Befestigungspunkte 45 und 46 für die Zugfeder 44 mit der Anlenkachse 31 zwischen der Koppel 30 und dem Antriebsarm 29 für das Schermesser 23 auf einer geraden Linie liegen.

Wird mit der gemäß Fig. 12 für das größte Übersetzungsverhältnis eingestellten Hand-Schere 21 ein Schnitt durchgeführt, dann nimmt die Hand-Schere ihre der Fig. 13 entsprechende Geschlossenstellung ein. Ein nachfolgendes Öffnen der Hand-Schere 21 bis in die der Fig. 9 entsprechende Stellung hat dann zur Folge, daß diese sich unter der Wirkung der Zugfeder 44 wieder selbsttätig für das kleinste Übersetzungsverhältnis einstellt, bei welchem die Koppel 30 mit ihrer Anlenkachse 32 in die Aufnahme- bzw. Rastmulde 43 eingerückt ist.

Die nachfolgende Wiedereinstellung der beiden anderen möglichen Übersetzungsverhältnisse erfordert dann lediglich die Einstellung der unterschiedlichen Öffnungsweiten zwischen den Handhebeln 24 und 25, wie sie den Fig. 10 und 12 entnehmbar sind.

## Patentansprüche

1. Hand-Schere (1), insbesondere Ast-, Hecken- und/oder Gartenschere,
- mit zwei durch zwei Handhebel (4 und 5) um ein gemeinsames Gelenk (6) verschwenkbaren Schneidelementen (2 und 3),
- bei welcher die Handhebel (4 und 5) durch ein zweites zum Schneidelementen-Gelenk (6) parallel versetztes Gelenk (8) unabhängig von den Schneidelementen (2 und 3) miteinander in unmittelbarer Verbindung stehen
- und bei welcher eines (2) der Schneidelemente (2 und 3) starr mit dem einen (4) der beiden Handhebel (4 und 5) in Verbindung steht,
- während das andere (3) der Schneidelemente (2 und 3) einen über das Schneidlementen-Gelenk (6) auskragenden Antriebsarm (9) aufweist,
- an dem eine Koppel (10) mit einem Ende angelenkt (11) ist,
- die wiederum über ihr anderes Ende ebenfalls gelenkig (12) am zweiten Handhebel (5) befestigt ist,
- wobei die beiden Handhebel (4 und 5) und die beiden Schneidelemente (2 und 3) miteinander ein Viergelenk-System bilden,
- bei dem zumindest die Anlenkachse (12) der Koppel (10) am zweiten Handhebel (5) relativ zu dem beide Handhebel (4 und 5) unmittelbar miteinander verbindenden Gelenk (8) in ihrem Abstand veränderbar ist,
- bei dem die Anlenkachse (12) der Koppel (10) am zweiten Handhebel (5) quer zu ihrer Achsrichtung verschiebbar und feststellbar geführt ist (13, 14, 17)
- und bei dem die Anlenkachse (12) der Koppel (10) in eine Schlitzführung (13) am zweiten Handhebel (5) eingreift sowie längs dieser mittels eines Schiebers (14) verstellbar (17) abgestützt ist, wobei
der Schieber (14) zu dem einen Bedienungshandgriff (15) aufweisenden oder bildenden Ende des zweiten Handhebels (5) hin geführt ist und dort mit einer zur Ein- und Festellvorrichtung (17 bzw. 18 bis 20) gekuppelt ist, die am Handhebel (5) ihr Widerlager hat (18 bis 20).

2. Hand-Schere nach Anspruch 1,
**dadurch gekennzeichnet,**
daß der zweite Handhebel (5) auf einem Teil seiner Länge aus einem Rohr oder Hohlprofil besteht, in dem der Schieber (14) auf dem größten Teil seiner Länge verdeckt aufgenommen ist.

3. Hand-Schere nach Anspruch 1 oder 2,
**dadurch gekenzeichnet,**
daß die Ein- und Feststellvorrichtung aus zwei ineinandergreifenden Gewindestücken besteht, von denen eines am Schieber (14) angreift, während das andere sein Widerlager (18 bis 20) am zweiten Handhebel (5) hat.

4. Hand-Schere nach Anspruch 3,
**dadurch gekennzeichnet,**
daß das eine Gewindestück am Schieber (14) angreift, während das andere Gewindestück am Handhebel (5) drehbeweglich, aber axial unverschiebbar gehalten ist.

5. Hand-Schere nach einem der Ansprüche 3 und 4,
**dadurch gekennzeichnet,**
daß das drehbewegliche Gewindeglied am freien Ende des Handhebels (5) oder aber in mit Abstand von diesem angeordneten Ausschnitten des Handhebels (5) drehbar aber verschiebefest abgestützt ist.

6. Hand-Schere nach einem der Ansprüche 1 und 2,
**dadurch gekennzeichnet,**
daß die Ein- und Feststellvorrichtung (17) von einem am Schieber (14) angreifenden Rastglied (18) gebildet ist, das mit einer sich in Längsrichtung des Handhebels (5) erstreckenden Rastkulisse (19) zusammenwirkt, die eine Mehrzahl von im Abstand hintereinanderliegenden Rasteingriffen (20) für das Rastglied (18) enthält.

7. Hand-Schere nach Anspruch 6,
**dadurch gekennzeichnet,**
daß das Rastglied (18) als durch Federkraft (21) in Einrückrichtung beaufschlagter Taster ausgelegt ist (Fig. 3).

8. Hand-Schere nach einem der Ansprüche 1 bis 7,
**dadurch gekennzeichnet,**
daß die Schlitzführung (33) im Handhebel (25) mit Aufnahme- bzw. Rastmulden (41, 42, 43) für die Anlenkachse (32) der Koppel (30) versehen ist, welche sich mindestens in der Außenseite des Handhebels (25) benachbarten Kante der Schlitzführung (33) befinden (Fig. 6 bis 13).

9. Hand-Schere nach einem der Ansprüche 1 bis 8,
**dadurch gekennzeichnet,**
daß die Aufnahme- bzw. Rastmulden (41, 42, 43) sich in zueinander etwa äquidistanter Anordnung in beiden Begrenzungskanten der Schlitzführungen (33) befinden.

10. Hand-Schere nach einem der Ansprüche 1 bis 9,
**dadurch gekennzeichnet,**
daß je eine Aufnahme- bzw. Rastmulde (41 und 43) an beiden Enden der Schlitzführungen (33) und eine weitere Aufnahme- bzw. Rastmulde (42) etwa auf halber Länge der Schlitzführung (33) angeordnet ist (Fig. 6 bis 13).

11. Hand-Schere nach einem der Ansprüche 1 und 9 bis 10,
**dadurch gekennzeichnet,**
daß an der mit ihrer Anlenkachse (32) in die Schlitzführung (33) am zweiten Handhebel (25) eingreifende Koppel (30) im Abstandsbereich zwischen deren beiden Anlenkachsen (31 und 32) ein Federelement (44) mit einer Wirkrichtung angreift, welche von dem die beiden Handhebel (24 und 25) unmittelbar verbindenden Gelenk (28) weg gerichtet ist, und daß der Öffnungs-Schwenkwinkel zwischen beiden Schermessern (22 und 23) durch einen ortsfesten Anschlag (47) am Handhebel (24) begrenzt ist.

12. Hand-Schere nach Anspruch 11,
**dadurch gekennzeichnet,**
daß das Federelement aus einer Zugfeder (44) besteht, die mit ihrem einen Ende an der Koppel (30) angreift (46), während ihr anderes Ende am zweiten Handhebel (25) verankert ist (45).

13. Hand-Schere nach einem der Ansprüche 11 und 12,
**dadurch gekennzeichnet,**
daß der Angriffspunkt (46) der Zugfeder (44) an der Koppel (30) von deren in die Schlitzführung (33) eingreifenden Anlenkachse (32) einen größeren Abstand hat als von deren Anlenkachse (31) am Antriebsarm (29) des zweiten Schermessers.

## Claims

1. A pair of hand-shears (1), in particular pruning, hedge and/or garden shears,
- having two cutter elements (2 and 3) pivotable about a common hinge (6) by two handles (4 and 5);
- in which independently of the cutter elements (2 and 3) the handles (4 and 5) are connected directly together by a second hinge (8) offset in parallel with the cutter elements hinge (6);
- and in which one (2) of the cutter elements (2 and 3) is connected rigidly to one (4) of the pair of handles (4 and 5);
- whilst the other (3) of the cutter elements (2 and 3) exhibits, projecting beyond the cutter elements hinge (6), a driving arm (9)
- to which a link (10) is hinged (11) by one end
- and via its other end is fastened likewise in a hinge (12) to the second handle (5);
- so that the pair of handles (4 and 5) and the pair of cutter elements (2 and 3) form together a four-bar system;
- in which at least the distance of the hingepin (12) between the link (10) and the second handle (5) from the hinge (8) connecting the pair of handles (4 and 5) directly together may be altered;
- in which the hingepin (12) between the link (10) and the second handle (5) is guided (13, 14, 17) so as to be able to shift transversely to its axial direction and be fixed;
- and in which the hingepin (12) of the link (10) engages in a slot-guide (13) on the second handle (5) and also is supported adjustably (17) along the latter by means of a slider (14), where
- the slider (14) is guided towards the end of the second handle (5) which exhibits or forms an operating handle (15) and is coupled there to a mechanism (17 or 18 to 20) for setting and fixing, which has its abutment (18 to 20) on the handle (5).

2. A pair of hand-shears as in Claim 1,
**characterized in that**
the second handle (5) over part of its length consists of a tube or hollow section in which the slider (14) is received concealed over the greater part of its length.

3. A pair of hand-shears as in Claim 1 or 2, **characterized** in that the setting and fixing mechanism consists of two interengaging threaded pieces, one of which engages with the slider (14) whilst the other has its abutment (18 to 20) on the second handle (5).

4. A pair of hand-shears as in Claim 3,
**characterized in that**
one threaded piece engages with the slider (14) whilst the other threaded piece is held on the handle (5) so as to be movable in rotation but unable to shift axially.

5. A pair of hand-shears as in one of the Claims 3 and 4,
**characterized in that**
the threaded member movable in rotation is supported to be able to turn but fixed against shifting at the free end of the handle (5) or else in portions of the handle (5) arranged at a distance from the said free end.

6. A pair of hand-shears as in one of the Claims 1 and 2,
**characterized in that**
the setting and fixing mechanism (17) is formed of a catch member (18) which engages with the slider (14) and cooperates with a catch gate (19) which extends in the direction longitudinal to the handle (5) and contains a plurality of catch teeth (20) lying one behind the other at intervals for the catch member (18).

7. A pair of hand-shears as in Claim 1,
**characterized in that**
the catch member (18) is designed as a button acted upon by spring force (21) in the direction of engagement (Figure 3).

8. A pair of hand-shears as in one of the Claims 1 to 7,
**characterized in that**
the slot-guide (33) in the handle (25) is provided for the hingepin (32) of the link (30) with receiver or catch hollows (41, 42, 43) which lie at least in the edge of the slot-guide (33) adjacent to the outside of the handle (25) (Figures 6 to 13).

9. A pair of hand-shears as in one of the Claims 1 to 8,
**characterized in that**
the receiver or catch hollows (41, 42, 43) lie in both boundary edges of the slot-guides (33) in an arrangement nearly equidistant from one another.

10. A pair of hand-shears as in one of the Claims 1 to 9,
**characterized in that**
one receiver or catch hollow (41 and 43) is arranged at each end of the slot-guides (33) and a further receiver or catch hollow (42) at about halfway along the slot-guide (33) (Figures 6 to 13).

11. A pair of hand-shears as in one of the Claims 1 and 9 to 10,
**characterized in that**
the link (30) which engages by its hingepin (32) in the slot-guide (33) on the second handle (25) is engaged in the range of distance between its pair of hingepins (31 and 32) by a spring element (44) with a direction of action directed away from the hinge (28) which directly connects the pair of handles (24 and 25), and that the angle of pivot at the opening between the pair of shear blades (22 and 23) is limited by a fixed stop (47) on the handle (24).

12. A pair of hand-shears as in Claim 11,
**characterized in that**
the spring element consists of a tension spring (44) which engages (46) by one end of it with the link (30), whilst the other end of it is anchored (45) to the second handle (25).

13. A pair of hand-shears as in one of the Claims 11 and 12,
**characterized in that**
the point of engagement (46) of the tension spring (44) with the link (30) is at a greater distance from the latter's hingepin (32) which engages in the slot-guide (33) than from its hingepin (31) on the driving arm (29) of the second shear-blade.

## Revendications

1. Cisailles à main (1), en particulier un sécateur, cisailles à haies et/ou de jardinage,
- présentant deux éléments coupants (2 et 3) pouvant être pivotés grâce à deux leviers à main (4 et 5) autour d'une articulation (6) commune,
- les leviers à main (4 et 5) étant reliés directement l'un à l'autre, indépendamment des éléments coupants (2 et 3), via une deuxième articulation (8) parallèle à l'articulation (6) des éléments coupants
- et un (2) des éléments coupants (2 et 3) étant relié de manière rigide à un (4) des deux leviers à main (4 et 5)
- alors que l'autre (3) des éléments coupants (2 et 3) présente un bras de commande (9) se prolongeant au-delà de l'articulation (6) des éléments coupants
- auquel est articulé (11) une extrémité d'une bielle (10),
- l'autre extrémité de ladite bielle étant fixée, également via une articulation (12), au deuxième levier à main (5),
- les deux leviers à main (4 et 5) et les deux éléments coupants (2 et 3) formant un système à 4 articulations
- dans lequel au moins la distance de l'axe d'articulation (12) de la bielle (10) sur le deuxième levier à main (5) peut être modifiée par rapport à l'articulation (8) reliant directement les deux leviers à main (4 et 5),
- dans lequel l'axe d'articulation (12) de la bielle (10) sur le deuxième levier à main (5) peut être déplacé transversalement par rapport à la direction de l'axe et est guidé de manière réglable (13, 14, 17)
- et dans lequel l'axe d'articulation (12) de la bielle (10) s'agrippe dans un guidage à mortaise (13) au deuxième levier à main (5) et s'appuie de manière à pouvoir être réglé (17) le long de celui-ci via un curseur (14),
le curseur (14) étant guidé vers l'extrémité du deuxième levier à main (5) comportant ou formant un poignée de manoeuvre (15) et étant accouplé à un dispositif de réglage et de fixation (17 ou 18 à 20) dont la butée (18 à 20) est située sur le levier à main (5).

2. Cisailles à main selon la revendication 1, caractérisées en ce que le deuxième levier à main (5) est constitué par un tube ou un profil creux, au moins sur une partie de sa longueur, qui peut envelopper la plus grande partie de la longueur du curseur (14).

3. Cisailles à main selon la revendication 1 ou 2, caractérisées en ce que le dispositif de réglage et de fixation est constitué par deux douilles filetées s'agrippant l'une dans l'autre, le curseur (14) s'agrippant à l'une d'elles alors que l'autre comporte une butée (18 à 20) sur le deuxième levier à main (5).

4. Cisailles à main selon la revendication 3, caractérisées en ce qu'une des douilles s'agrippe au curseur (14) alors que l'autre douille est maintenue sur le levier à main (5) de manière à pouvoir pivoter sans toutefois pouvoir être déplacé axialement.

5. Cisailles à main selon une des revendications 3 et 4, caractérisées en ce que la douille pivotante est soutenue de manière pivotante mais sans pouvoir être déplacée axialement à l'extrémité libre du levier à main (5) ou dans des encoches disposées dans ledit levier (5) à une certaine distance de l'extrémité libre.

6. Cisailles à main selon une des revendications 1 et 2, caractérisées en ce que le dispositif de réglage et de fixation (17) est constitué par un élément à crans (18) qui s'agrippe au curseur (14) et qui interagit avec une coulisse d'encliquetage (19) s'étendant longitudinalement par rapport au levier à main (5) et contenant un certain nombre d'encoches d'encliquetage (20) disposées l'une derrière l'autre pour l'élément à crans (18).

7. Cisailles à main selon la revendication 6, caractérisées en ce que l'élément à crans (18) est conçu sous forme de palpeurs dont l'enfoncement est provoqué par une force de ressort (21) (fig. 3).

8. Cisailles à main selon une quelconque des revendications 1 à 7, caractérisées en ce que le guidage à mortaise (33) dans le levier à main (25) est équipé de cavités de logement ou d'encliquetage (41, 42, 43) pour l'axe d'articulation (32) de la bielle (30), qui sont au moins situées du côté de la mortaise (33) près du côté extérieur du levier à main (25) (fig. 6 à 13).

9. Cisailles à main selon une quelconque des revendications 1 à 8, caractérisées en ce que les cavités d'encliquetage ou de logement (41, 42, 43) sont situées à une distance équilatérale l'une de l'autre des deux côtés de la mortaise (33).

10. Cisailles à main selon une quelconque des revendications 1 à 9, caractérisées en ce qu'une cavité d'encliquetage ou de logement (41 et 43) est située à chaque extrémité de la mortaise (33) et en ce qu'une autre cavité d'encliquetage ou de logement (42) se trouve environ à mi-chemin de la longueur de la mortaise (33) (fig. 6 à 13).

11. Cisailles à main selon une quelconque des revendications 1 et 9 à 10, caractérisées en ce qu'un élément de ressort (44) s'agrippe à la bielle (30), qui s'agrippe avec son axe d'articulation (32) dans le guidage par mortaise (33) au deuxième levier à main (25), à une certaine distance entre ses deux axes d'articulation (31 et 32) et qui agit dans une direction s'éloignant de l'articulation (28) reliant directement les deux leviers à main (24 et 25) et en ce que l'angle d'ouverture entre les deux lames (22 et 23) est limité par une butée (47) fixe sur le levier à main (24).

12. Cisailles à main selon la revendication 11, caractérisées en ce que l'élément à ressort est un ressort à traction (44) qui s'agrippe (46) en une de ses extrémités à la bielle (30) alors qu'il est ancré (45) avec son autre extrémité dans le deuxième levier à main (25).

13. Cisailles à main selon une des revendications 11 et 12, caractérisées en ce que le point d'attache (46) du ressort à traction (44) est situé sur la bielle (30) à une plus grande distance de l'axe d'articulation (32) qui s'agrippe dans le guidage à mortaise (33) que de l'axe d'articulation (31) sur le bras de commande (29) de la deuxième lame.
